(19) 

**Europäisches Patentamt**
**European Patent Office**
**Office européen des brevets**

(11) **EP 4 657 031 A1**

(12) **EUROPEAN PATENT APPLICATION**

(43) Date of publication:
03.12.2025 Bulletin 2025/49

(21) Application number: 25178809.7

(22) Date of filing: 26.05.2025

(51) International Patent Classification (IPC):
*G01F 1/60* (2006.01)      *G01F 25/10* (2022.01)

(52) Cooperative Patent Classification (CPC):
G01F 1/60; G01F 25/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 28.05.2024 JP 2024086237

(71) Applicant: Yokogawa Electric Corporation
Tokyo 180-8750 (JP)

(72) Inventors:
• IWASHITA, Junichi
Musashino-shi, Tokyo, 180-8750, (JP)
• ISHIKAWA, Ikuhiko
Musashino-shi, Tokyo, 180-8750, (JP)
• TSUMURA, Kosuke
Musashino-shi, Tokyo, 180-8750, (JP)

(74) Representative: Winter, Brandl - Partnerschaft mbB
Alois-Steinecker-Straße 22
85354 Freising (DE)

(54) **DETECTION CONTROLLER, ELECTROMAGNETIC FLOWMETER, AND COMPUTER PROGRAM**

(57) In an electromagnetic flowmeter (1), a flow rate detector (10) applies a first magnetic field having a first frequency and a second magnetic field having a second frequency higher than the first frequency to a measurement target fluid (FL) and detects a flow rate signal corresponding to the first magnetic field and the second magnetic field, and a detection controller (20) calculates a first flow rate corresponding to the first frequency on the basis of the flow rate signal, calculates a second flow rate corresponding to the second frequency on the basis of the flow rate signal, calculates a third flow rate on the basis of the first flow rate and the second flow rate, and executes predetermined processing in a case where it is determined that a differential noise amount included in the flow rate signal is greater than or equal to a predetermined value.

FIG.1

EP 4 657 031 A1

## Description

FIELD

The present disclosure relates to a detection controller, an electromagnetic flowmeter, and a program.

BACKGROUND

Electromagnetic flowmeters that measure the flow rate of a fluid using electromagnetic induction are widely used in industrial applications. Since an electromotive force (hereinafter, also referred to as "fluid electromotive force") generated by a fluid flowing in a measurement pipe (hereinafter, also referred to as "measurement target fluid"), in which a magnetic field is formed, is proportional to the flow rate of the measurement target fluid, in an electromagnetic flowmeter, the flow rate of the measurement target fluid (hereinafter, also referred to as "fluid flow rate") is measured on the basis of the fluid electromotive force.

Examples of related-art are described in Japanese Laid-open Patent Publication No. 2010-276470 and in Japanese Laid-open Patent Publication No. JP 2010-266257.

As one type of noise that may be included in a signal indicating a fluid flow rate (hereinafter, also referred to as "flow rate signal"), there is "differential noise". The differential noise is generated by a change in a magnetic field in a measurement pipe (hereinafter, also referred to as "in-pipe magnetic field"). In addition, the differential noise is generated in a spike shape in synchronization with the frequency of an excitation current flowing through an excitation coil disposed in the vicinity of the measurement pipe and is attenuated exponentially.

Furthermore, the differential noise is likely to occur in a case where the conductivity of a measurement target fluid is low.

Since the differential noise generated as described above is a main factor of an error in a measurement value of a fluid flow rate (hereinafter, also referred to as "measurement value error"), it is desirable that appropriate measures be taken against the differential noise.

SUMMARY

According to an aspect of an embodiment, a detection controller in the present disclosure is connected to a flow rate detector that applies a first magnetic field having a first frequency and a second magnetic field having a second frequency higher than the first frequency to a measurement target fluid and detects a flow rate signal corresponding to the first magnetic field and the second magnetic field. The detection controller includes a processor. The processor calculates a first flow rate corresponding to the first frequency on a basis of the flow rate signal, calculates a second flow rate corresponding to the second frequency on a basis of the flow rate signal, calculates a third flow rate on a basis of the first flow rate and the second flow rate, and executes predetermined processing in a case where it is determined that a differential noise amount included in the flow rate signal is greater than or equal to a predetermined value.

BRIEF DESCRIPTION OF THE DRAWINGS

FIG. 1 is a diagram illustrating a configuration example of an electromagnetic flowmeter according to a first embodiment of the present disclosure;
FIG. 2 is a graph illustrating an operation example of a detection controller according to the first embodiment of the present disclosure; and
FIG. 3 is a graph illustrating an operation example of a detection controller according to a second embodiment of the present disclosure.

DESCRIPTION OF EMBODIMENTS

Hereinafter, embodiments of the present disclosure will be described with reference to the drawings.
In the following embodiments, the same parts or the same processing are denoted by the same reference numerals, and redundant description may be omitted.

First Embodiment

Configuration of Electromagnetic Flowmeter

As an excitation system of an electromagnetic flowmeter used for measuring the flow rate of a measurement target fluid, there is known an excitation system of forming a composite magnetic field (hereinafter, also referred to as "dual frequency excitation system") by simultaneously supplying a low-frequency excitation current (hereinafter, also referred to as "low-frequency excitation current") and a high-frequency excitation current (hereinafter, also referred to as "high-frequency excitation current") to an excitation coil. Hereinafter, an electromagnetic flowmeter using a dual frequency excitation system will be described as an example.

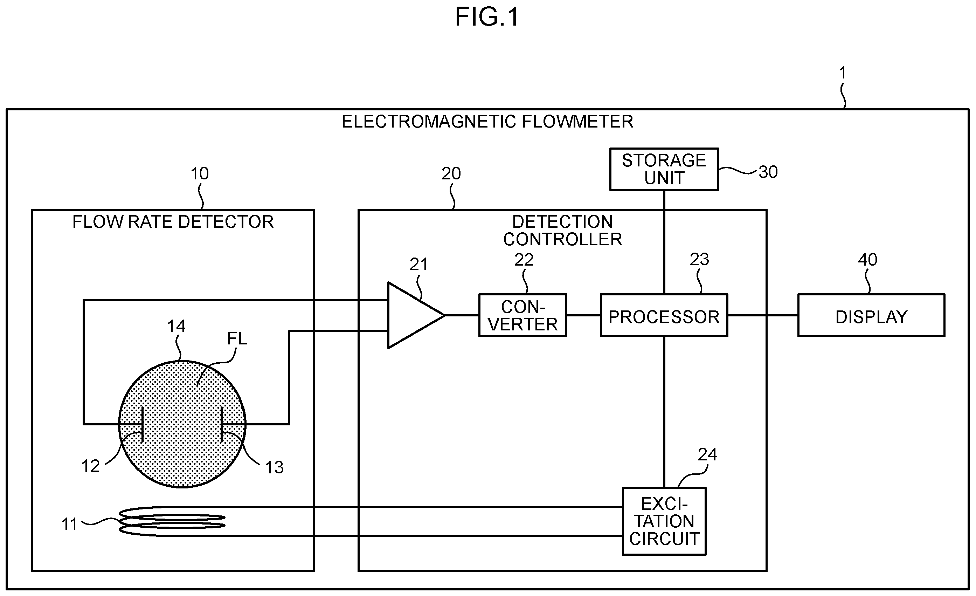

FIG. 1 is a diagram illustrating a configuration example of an electromagnetic flowmeter according to a first embodiment of the present disclosure. In FIG. 1, the electromagnetic flowmeter 1 includes a flow rate detector 10, a detection controller 20, a storage unit 30, and a display 40. Examples of the storage unit 30 include a memory, a storage, and the like. Examples of the display 40 include a liquid crystal display (LCD) and the like.

The flow rate detector 10 includes an excitation coil 11, a first electrode 12, a second electrode 13, and a measurement pipe 14. A measurement target fluid FL flows in the measurement pipe 14.

The excitation coil 11 is supplied with an excitation current obtained by adding a low-frequency excitation current and a high-frequency excitation current (hereinafter, also referred to as "dual frequency excitation current") from an excitation circuit 24 and forms an in-pipe magnetic field, which is a composite magnetic field, in the measurement pipe 14 depending on the dual frequency excitation current supplied thereto. Since the frequency of the high-frequency excitation current is higher than the frequency of the low-frequency excitation current, a composite magnetic field, which includes a magnetic field having the frequency of the low-frequency excitation current (hereinafter, also referred to as "low-frequency magnetic field") and a magnetic field having the frequency of the high-frequency excitation current (hereinafter, also referred to as "high-frequency magnetic field"), is formed as the in-pipe magnetic field. Therefore, in the measurement pipe 14, the low-frequency magnetic field and the high-frequency magnetic field are applied to the measurement target fluid FL as a composite magnetic field.

The first electrode 12 and the second electrode 13 detect the in-pipe magnetic field and a signal of the fluid electromotive force proportional to the flow rate of the measurement target fluid as a flow rate signal and output the detected flow rate signal to the detection controller 20. Since the in-pipe magnetic field is a composite magnetic field including the low-frequency magnetic field and the high-frequency magnetic field, the first electrode 12 and the second electrode 13 detect a flow rate signal obtained by adding a flow rate signal corresponding to the low-frequency magnetic field and a flow rate signal corresponding to the high-frequency magnetic field (hereinafter, also referred to as "dual frequency flow rate signal").

Meanwhile, the detection controller 20 includes an amplifier 21, a converter 22, a processor 23, and an excitation circuit 24. The processor 23 is connected with the storage unit 30 and the display 40. Examples of the processor 23 include a central processing unit (CPU) and a micro processing unit (MPU).

The dual frequency flow rate signal detected by the flow rate detector 10 is input to the amplifier 21. The amplifier 21 amplifies the dual frequency flow rate signal and outputs the amplified dual frequency flow rate signal to the converter 22.

The converter 22 converts an analog signal of the dual frequency flow rate signal into a digital value of the dual frequency flow rate signal and outputs the digital value of the dual frequency flow rate signal to the processor 23.

The processor 23 performs a predetermined calculation on the dual frequency flow rate signal at timing synchronized with the frequency of the low-frequency excitation current to calculate a flow rate corresponding to the frequency of the low-frequency magnetic field (hereinafter, also referred to as "low-frequency flow rate LF").

The processor 23 also performs a predetermined calculation on the dual frequency flow rate signal at timing synchronized with the frequency of the high-frequency excitation current to calculate a flow rate corresponding to the frequency of the high-frequency magnetic field (hereinafter, also referred to as "high-frequency flow rate HF").

For example, the processor 23 calculates the current low-frequency flow rate LF_LPF(n) after low-pass filter processing from Equation (1) and calculates the current high-frequency flow rate HF_HPF(n) after high-pass filter processing from Equation (2). In Equation (1), LF_LPF(n - 1) denotes a low-frequency flow rate after the low-pass filter processing that has been calculated most recently, Kt denotes a damping coefficient, and LF(n) denotes the current low-frequency flow rate before the low-pass filter processing. In Equation (2), HF(n) denotes the current high-frequency flow rate before the high-pass filter processing, and HF_LPF(n) denotes the current high-frequency flow rate after the low-pass filter processing.

$$LF\_LPF(n) = LF\_LPF(n - 1) + Kt(LF(n) - LF\_LPF(n - 1)) \quad (1)$$

$$HF\_HPF(n) = HF(n) - HF\_LPF(n) \quad (2)$$

The processor 23 also adds up the low-frequency flow rate LF and the high-frequency flow rate HF at the timing synchronized with the frequency of the high-frequency excitation current to calculate a flow rate corresponding to the dual frequency excitation current (hereinafter, also referred to as "dual frequency flow rate DF"). Then, the processor 23 causes the display 40 to display the calculated dual frequency flow rate DF. For example, the processor 23 calculates the current dual frequency flow rate DF(n) from Equation (3).

$$DF(n) = LF\_LPF(n) + HF\_HPF(n) \quad (3)$$

In addition, the processor 23 executes predetermined processing in a case where it is determined that the differential noise amount (hereinafter, also referred to as "dual frequency differential noise amount") included in the dual frequency flow rate signal is greater than or equal to a predetermined value.

The excitation circuit 24 supplies the dual frequency excitation current to the excitation coil 11 on the basis of an excitation control signal from the processor 23.

Operation of Detection Controller

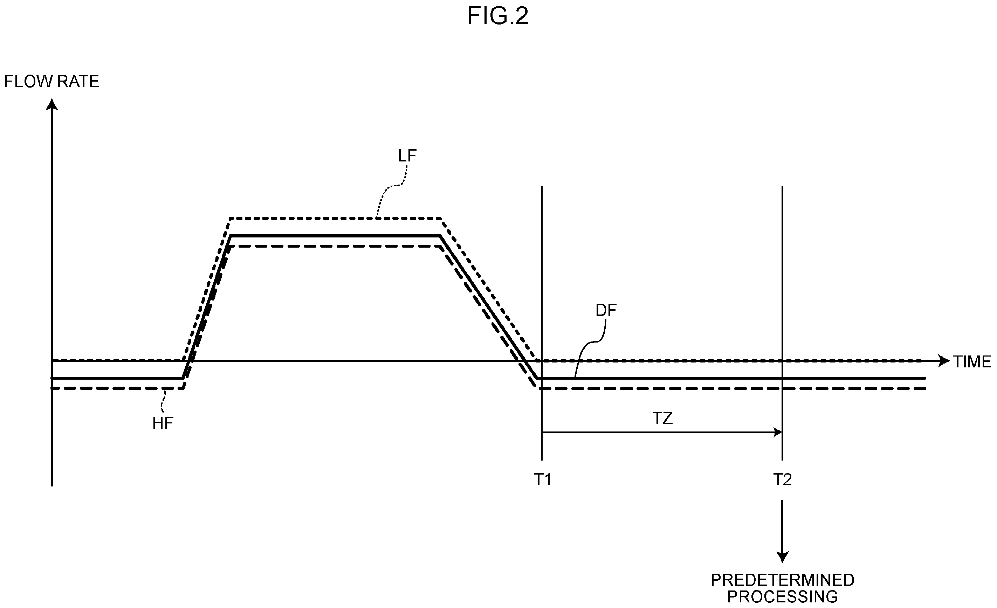

FIG. 2 is a graph illustrating an operation example of the detection controller according to the first embodiment of the disclosure. Here, the differential noise is fluid noise generated by a change in the in-pipe magnetic field, is generated in synchronization with the frequency of the excitation current, and has a characteristic of being exponentially attenuated, and thus affects the stability of the zero point. Therefore, an output drift as illustrated in FIG. 2, particularly a zero drift, occurs due to the differential noise.

Therefore, as illustrated in FIG. 2, when it is detected that the low-frequency flow rate LF has been zero for a predetermined time TZ with a first time point T1 at which the low-frequency flow rate LF has become zero as a starting point, the processor 23 determines whether or not the dual frequency differential noise amount is greater than or equal to the predetermined value at a second time point T2 when the predetermined time TZ has elapsed from the first time point T1. When the low-frequency flow rate LF has a value greater than 0 before the lapse of the predetermined time TZ (namely, before reaching the second time point T2), the processor 23 stops measurement of the predetermined time TZ and starts measurement of the predetermined time TZ again with a first time point T1 at which the low-frequency flow rate LF becomes 0 again as a starting point.

Then, in a case where it is determined that the dual frequency differential noise amount is greater than or equal to the predetermined value at the second time point T2, the processor 23 executes at least one type of predetermined processing described in the following first, second, and third predetermined processing examples.

First Predetermined Processing Example

The processor 23 performs, as predetermined processing, processing of issuing a warning in a case where it is determined that the dual frequency differential noise amount is greater than or equal to the predetermined value at a second time point T2. For example, the processor 23 causes the display 40 to display a warning message.

Second Predetermined Processing Example

In a case where it is determined that the dual frequency differential noise amount is greater than or equal to the predetermined value at the second time point T2, the processor 23 performs processing of displaying the differential noise amount on the display 40 as predetermined processing.

Third Predetermined Processing Example

In a case where it is determined that the dual frequency differential noise amount is greater than or equal to the predetermined value at the second time point T2, the processor 23 performs processing of storing the differential noise amount in the storage unit 30 as predetermined processing. For example, the processor 23 stores the current date and time and the differential noise amount in the storage unit 30 in association with each other.

Furthermore, the processor 23 determines whether or not the dual frequency differential noise amount is greater than or equal to the predetermined value as in any of the following first to third determination examples.

First Determination Example

In a case where the difference between the average value of the low-frequency flow rate LF and the average value of the dual frequency flow rate DF after lapse of the predetermined time TZ from the first time point T1 when the low-frequency flow rate LF has become 0 is greater than or equal to a threshold value at the second time point T2, the processor 23 determines that the dual frequency differential noise amount is greater than or equal to the predetermined value.

Second Determination Example

In a case where the difference between the average value of the low-frequency flow rate LF and the average value of the high-frequency flow rate HF after lapse of the predetermined time TZ from the first time point T1 when the low-frequency flow rate LF has become 0 is greater than or equal to a threshold value at the second time point T2, the processor 23 determines that the dual frequency differential noise amount is greater than or equal to the predetermined value.

Third Determination Example

In a case where the difference between the average value of the high-frequency flow rate HF and 0 after lapse of the predetermined time TZ from the first time point T1 when the low-frequency flow rate LF has become 0 is greater than or equal to a threshold value at the second time point T2, the processor 23 determines that the dual frequency differential noise amount is greater than or equal to the predetermined value.
The first embodiment has been described above.

Second Embodiment

In a second embodiment, in a case where it is determined that the dual frequency differential noise amount is greater than or equal to a predetermined value at a second time point T2, the processor 23 executes predetermined processing described in the following fourth predetermined processing example. The processor 23 may execute at least one type of predetermined processing in the first, second, and third predetermined processing examples of the first embodiment and the predetermined processing described in the following fourth predetermined processing example in combination.

Fourth Predetermined Processing Example

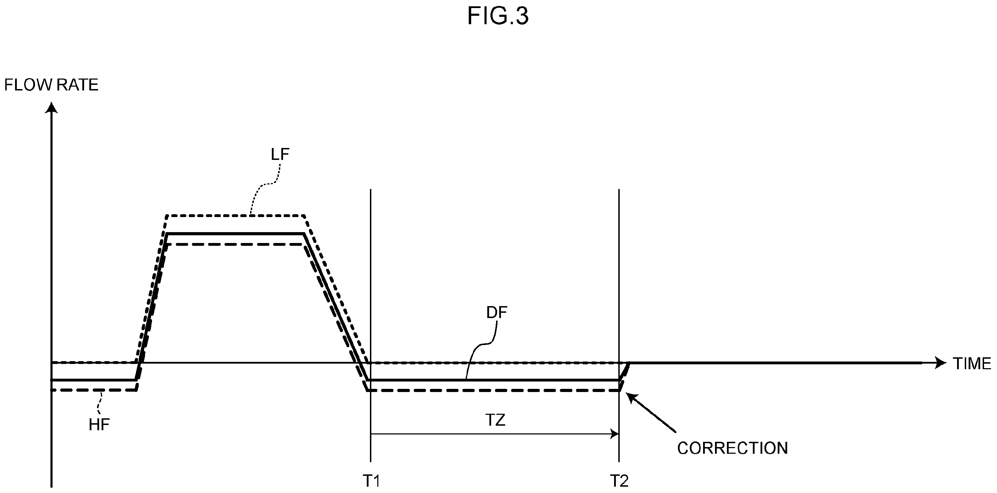

FIG. 3 is a graph illustrating an operation example of a detection controller according to the second embodiment of the disclosure. Hereinafter, points different from the first embodiment will be described, and description of the same points as the first embodiment will be omitted.
As illustrated in FIG. 3, in a case where it is determined that the dual frequency differential noise amount is greater than or equal to the predetermined value at the second time point T2, the processor 23 performs, as predetermined processing, processing of correcting the high-frequency flow rate HF to 0.
The second embodiment has been described above.

Third Embodiment

All or some types of processing in the detection controller 20 may be implemented by causing the processor 23 to execute a program corresponding to each type of processing. For example, a program corresponding to each type of processing in the detection controller 20 may be stored in the storage unit 30. In addition, for example, a program corresponding to each type of processing in the detection controller 20 may be stored in a program server connected to the detection controller 20 via a network, downloaded from the program server to the detection controller 20, and executed. Furthermore, for example, a program corresponding to each type of processing in the detection controller 20 may be stored in a recording medium readable by the detection controller 20, read from the recording medium, and executed.
The third embodiment has been described above.
As described above, the detection controller (the detection controller 20 of the embodiment) of the present disclosure includes a processor (the processor 23 of the embodiment) and is connected to a flow rate detector (the flow rate detector 10 of the embodiment) that applies a first magnetic field (the low-frequency magnetic field of the embodiment) having a first frequency and a second magnetic field (the high-frequency magnetic field of the embodiment) having a second frequency higher than the first frequency to a measurement target fluid (the measurement target fluid FL of the embodiment) and detects a flow rate signal (the dual frequency flow rate signal of the embodiment) corresponding to the first magnetic field and the second magnetic field. The processor calculates a first flow rate (the low-frequency flow rate LF of the embodiment) corresponding to the first frequency on the basis of the flow rate signal, calculates a second flow rate (high-frequency flow rate HF of the embodiment) corresponding to the second frequency on the basis of the flow rate signal, and calculates a third flow rate (dual frequency flow rate DF of the embodiment) on the basis of the first flow rate and the second flow rate. In addition, the processor executes predetermined processing when determining that the differential noise amount (dual frequency differential noise amount of the embodiment) included in the flow rate signal is greater than or equal to the predetermined value.

For example, the processor performs processing of issuing a warning as predetermined processing in a case where it is determined that the differential noise amount is greater than or equal to the predetermined value. As a result, it is possible to notify an operator that there is a failure in the flow rate detector, thereby enabling the operator to take appropriate measures.

Furthermore, for example, in a case where it is determined that the differential noise amount is greater than or equal to the predetermined value, the processor performs processing of displaying the differential noise amount on a display (the display 40 in the embodiment) connected to the processor as predetermined processing. As a result, it is possible to notify the operator that an error in the flow rate detector is large, thereby enabling the operator to take appropriate measures depending on the differential noise amount.

Furthermore, for example, in a case where it is determined that the differential noise amount is greater than or equal to the predetermined value, the processor performs processing of storing the differential noise amount in a storage unit (the storage unit 30 in the embodiment) connected to the processor as predetermined processing. As a result, it is possible to record the differential noise amount greater than or equal to the predetermined value, and thus it is possible to take appropriate measures on the basis of the analysis result of the differential noise amount.

In addition, for example, the processor performs processing of correcting the second flow rate to zero in a case where it is determined that the differential noise amount is greater than or equal to the predetermined value. Since the influence of a zero drift and the like due to the differential noise is greater in the second flow rate, the above practice makes it possible to automatically take an appropriate measure of suppressing a measurement value error that is generated on the basis of the differential noise.

As described above, according to the detection controller of the present disclosure, it is possible to take appropriate measures against differential noise included in a fluid signal.

According to the present disclosure, it is possible to take appropriate measures against differential noise included in a fluid signal.

Some exemplary combinations in the technology of the present disclosure are also described below.

(1) A detection controller connected to a flow rate detector that applies a first magnetic field having a first frequency and a second magnetic field having a second frequency higher than the first frequency to a measurement target fluid and detects a flow rate signal corresponding to the first magnetic field and the second magnetic field, the detection controller comprising:

a processor that calculates a first flow rate corresponding to the first frequency on a basis of the flow rate signal, calculates a second flow rate corresponding to the second frequency on a basis of the flow rate signal, calculates a third flow rate on a basis of the first flow rate and the second flow rate, and executes predetermined processing in a case where it is determined that a differential noise amount included in the flow rate signal is greater than or equal to a predetermined value.

(2) The detection controller according to (1), wherein

the processor performs, as the predetermined processing, processing of issuing a warning in the case where it is determined that the differential noise amount is greater than or equal to the predetermined value.

(3) The detection controller according to (1) or (2), wherein

the processor performs, as the predetermined processing, processing of causing a display connected to the processor to display the differential noise amount in the case where it is determined that the differential noise amount is greater than or equal to the predetermined value.

(4) The detection controller according to any one of (1) to (3), wherein

the processor performs, as the predetermined processing, processing of causing a storage unit connected to the processor to store the differential noise amount in the case where it is determined that the differential noise amount is greater than or equal to the predetermined value.

(5) The detection controller according to any one of (1) to (4), wherein

the processor performs, as the predetermined processing, processing of correcting the second flow rate to zero in the case where it is determined that the differential noise amount is greater than or equal to the predetermined value.

(6) The detection controller according to any one of (1) to (5), wherein

the processor determines that the differential noise amount is greater than or equal to the predetermined value in a case where a difference between an average value of the first flow rate and an average value of the third flow rate, after lapse of a predetermined time from a time point at which the first flow rate has reached zero, is greater than or equal to a threshold value.

(7) The detection controller according to any one of (1) to (5), wherein

the processor determines that the differential noise amount is greater than or equal to the predetermined value in a case where a difference between an average value of the first flow rate and an average value of the second flow rate, after lapse of a predetermined time from a time point at which the first flow rate has reached zero, is greater than or equal to a threshold value.

(8) The detection controller according to any one of (1) to (5), wherein
the processor determines that the differential noise amount is greater than or equal to the predetermined value in a case where a difference between an average value of the second flow rate and zero, after lapse of a predetermined time from a time point at which the first flow rate has reached zero, is greater than or equal to a threshold value.

(9) An electromagnetic flowmeter comprising:

a flow rate detector that applies a first magnetic field having a first frequency and a second magnetic field having a second frequency higher than the first frequency to a measurement target fluid and detects a flow rate signal corresponding to the first magnetic field and the second magnetic field; and
a detection controller that calculates a first flow rate corresponding to the first frequency on a basis of the flow rate signal, calculates a second flow rate corresponding to the second frequency on a basis of the flow rate signal, calculates a third flow rate on a basis of the first flow rate and the second flow rate, and executes predetermined processing in a case where it is determined that a differential noise amount included in the flow rate signal is greater than or equal to a predetermined value, the detection controller connected to the flow rate detector.

(10) A program that can be used for a detection controller connected to a flow rate detector that applies a first magnetic field having a first frequency and a second magnetic field having a second frequency higher than the first frequency to a measurement target fluid and detects a flow rate signal corresponding to the first magnetic field and the second magnetic field, the program causing a processor included in the detection controller to execute the processing of:

calculating a first flow rate corresponding to the first frequency on a basis of the flow rate signal;
calculating a second flow rate corresponding to the second frequency on a basis of the flow rate signal;
calculating a third flow rate on a basis of the first flow rate and the second flow rate; and
executing predetermined processing in a case where it is determined that a differential noise amount included in the flow rate signal is greater than or equal to a predetermined value.

**Claims**

1. A detection controller (20) connected to a flow rate detector (10) that applies a first magnetic field having a first frequency and a second magnetic field having a second frequency higher than the first frequency to a measurement target fluid and detects a flow rate signal corresponding to the first magnetic field and the second magnetic field, the detection controller (20) comprising:
a processor (23) that calculates a first flow rate corresponding to the first frequency on a basis of the flow rate signal, calculates a second flow rate corresponding to the second frequency on a basis of the flow rate signal, calculates a third flow rate on a basis of the first flow rate and the second flow rate, and executes predetermined processing in a case where it is determined that a differential noise amount included in the flow rate signal is greater than or equal to a predetermined value.

2. The detection controller (20) according to claim 1, wherein
the processor (23) performs, as the predetermined processing, processing of issuing a warning in the case where it is determined that the differential noise amount is greater than or equal to the predetermined value.

3. The detection controller (20) according to claim 1 or 2, wherein
the processor (23) performs, as the predetermined processing, processing of causing a display connected to the processor to display the differential noise amount in the case where it is determined that the differential noise amount is greater than or equal to the predetermined value.

4. The detection controller (20) according to any one of claims 1 to 3, wherein
the processor (23) performs, as the predetermined processing, processing of causing a storage unit connected to the processor to store the differential noise amount in the case where it is determined that the differential noise amount is greater than or equal to the predetermined value.

5. The detection controller (20) according to any one of claims 1 to 4, wherein
the processor (23) performs, as the predetermined processing, processing of correcting the second flow rate to zero in the case where it is determined that the differential noise amount is greater than or equal to the predetermined value.

6. The detection controller (20) according to any one of claims 1 to 5, wherein
the processor (23) determines that the differential noise amount is greater than or equal to the predetermined value in a case where a difference between an average value of the first flow rate and an average value of the third flow rate, after lapse of a predetermined time from a time point at which the first flow rate has reached zero, is greater than or equal to a threshold value.

7. The detection controller (20) according to any one of claims 1 to 5, wherein
the processor (23) determines that the differential noise amount is greater than or equal to the predetermined value in a case where a difference between an average value of the first flow rate and an average value of the second flow rate, after lapse of a predetermined time from a time point at which the first flow rate has reached zero, is greater than or equal to a threshold value.

8. The detection controller (20) according to any one of claims 1 to 5, wherein
the processor (23) determines that the differential noise amount is greater than or equal to the predetermined value in a case where a difference between an average value of the second flow rate and zero, after lapse of a predetermined time from a time point at which the first flow rate has reached zero, is greater than or equal to a threshold value.

9. An electromagnetic flowmeter (1) comprising:

a flow rate detector (10) that applies a first magnetic field having a first frequency and a second magnetic field having a second frequency higher than the first frequency to a measurement target fluid and detects a flow rate signal corresponding to the first magnetic field and the second magnetic field; and
a detection controller (20) that calculates a first flow rate corresponding to the first frequency on a basis of the flow rate signal, calculates a second flow rate corresponding to the second frequency on a basis of the flow rate signal, calculates a third flow rate on a basis of the first flow rate and the second flow rate, and executes predetermined processing in a case where it is determined that a differential noise amount included in the flow rate signal is greater than or equal to a predetermined value, the detection controller (20) connected to the flow rate detector (10).

10. A non-transitory computer readable recording medium having stored therein a program that can be used for a detection controller connected to a flow rate detector that applies a first magnetic field having a first frequency and a second magnetic field having a second frequency higher than the first frequency to a measurement target fluid and detects a flow rate signal corresponding to the first magnetic field and the second magnetic field, the program causing a processor included in the detection controller to execute the processing of:

calculating a first flow rate corresponding to the first frequency on a basis of the flow rate signal;
calculating a second flow rate corresponding to the second frequency on a basis of the flow rate signal;
calculating a third flow rate on a basis of the first flow rate and the second flow rate; and
executing predetermined processing in a case where it is determined that a differential noise amount included in the flow rate signal is greater than or equal to a predetermined value.

# FIG.1

ELECTROMAGNETIC FLOWMETER

1

10 FLOW RATE DETECTOR

14 FL

12    13

11

20 DETECTION CONTROLLER

STORAGE UNIT 30

21

22 CON-VERTER

23 PROCESSOR

24 EXCI-TATION CIRCUIT

40 DISPLAY

EP 4 657 031 A1

# FIG.2

EP 4 657 031 A1

FIG.3

FLOW RATE

TIME

CORRECTION

T1

T2

TZ

DF

LF

HF

Europäisches
Patentamt
European
Patent Office
Office européen
des brevets

# EUROPEAN SEARCH REPORT

**Application Number**

EP 25 17 8809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 266257 A (YOKOGAWA ELECTRIC CORP) 25 November 2010 (2010-11-25) | 1-5,9,10 | INV. G01F1/60 G01F25/10 |
| A | * paragraphs [0001], [0008] - [0010], [0014] - [0017], [0025] - [0099]; figures 1-7 * | 6-8 | |
| A | JP 2002 310751 A (YOKOGAWA ELECTRIC CORP) 23 October 2002 (2002-10-23) * paragraphs [0001], [0003] - [0010], [0017] - [0021], [0024] - [0054], [0068] - [0070]; figures 1-11 * | 5 | |
| A | JP 2004 028928 A (YOKOGAWA ELECTRIC CORP) 29 January 2004 (2004-01-29) * the whole document * | 1-10 | |
| A | JP 2011 033491 A (YOKOGAWA ELECTRIC CORP) 17 February 2011 (2011-02-17) * paragraphs [0005] - [0009], [0012] - [0016], [0026] - [0030]; figures 1-6 * | 1-10 | |

**TECHNICAL FIELDS SEARCHED (IPC)**

G01F

The present search report has been drawn up for all claims

| Place of search | Date of completion of the search | Examiner |
|---|---|---|
| The Hague | 24 October 2025 | Feldhoff, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8809

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | | Publication date | Patent family member(s) | | Publication date |
|---|---|---|---|---|---|
| JP 2010266257 | A | 25-11-2010 | JP | 5532674 B2 | 25-06-2014 |
| | | | JP | 2010266257 A | 25-11-2010 |
| JP 2002310751 | A | 23-10-2002 | JP | 4161541 B2 | 08-10-2008 |
| | | | JP | 2002310751 A | 23-10-2002 |
| JP 2004028928 | A | 29-01-2004 | NONE | | |
| JP 2011033491 | A | 17-02-2011 | JP | 5293486 B2 | 18-09-2013 |
| | | | JP | 2011033491 A | 17-02-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010276470 A
- JP 2010266257 A